# EUROPEAN PATENT SPECIFICATION

(11) **EP 3 315 326 B1**
(45) Date of publication and mention of the grant of the patent: **01.01.2020**
(21) Application number: 17192435.0
(22) Date of filing: 21.09.2017
(51) Int. Cl.: B60C 11/03

(54) **TIRE**
REIFEN
PNEUMATIQUE

(30) Priority: 26.10.2016 JP 2016209884
(43) Date of publication of application: 02.05.2018
(73) Proprietor: SUMITOMO RUBBER INDUSTRIES, LTD., Kobe-shi, Hyogo (JP)
(72) Inventor: NAGASAWA, Koki, Kobe-shi Hyogo 651-0072 (JP)
(74) Representative: Manitz Finsterwald Patent- und Rechtsanwaltspartnerschaft mbB

(56) References cited:
- EP-A1- 3 015 290
- EP-A1- 3 075 572
- JP-A- 2013 136 333

## Description

### Technical Field

The present invention relates to a tire capable of exerting excellent on-snow performance.

### Background Art

For example, Japanese unexamined Patent Application No. 2013-136333 (Patent Literature 1) has disclosed a winter tire provided with a main groove extending straight and continuously in a tire circumferential direction and a plurality of oblique main grooves extending so as to intersect with the main groove.

However, the tire disclosed in Patent Literature 1 has room for further improvement in the on-snow performance.

EP 3 075 572 A1 discloses a tire comprising a first tread portion defined between a tire equator and a first tread edge which comprises oblique main grooves extending obliquely from the first tread edge toward the tire equator and extending to reach beyond the tire equator. Oblique land regions are defined between a pair of the oblique main grooves adjacent to each other in the tire circumferential direction. The oblique land regions comprise an oblique sub-groove extending from one of the pair of the oblique main grooves and terminating within the oblique land region. In addition, connecting grooves are provided extending on the both sides of the outer oblique sub-groove so as to connect between the pair of the oblique main grooves.

In addition, EP 3 015 290 A1 discloses a tire according to a related technology having straight shoulder main grooves and oblique grooves which do not extend up to the tire equator.

### Summary of the invention

The present invention was made in view of the above, and a primary object thereof is to provide a tire capable of exerting excellent on-snow performance.

In one aspect of the present invention, a tire comprises a tread portion comprising a first tread portion defined between a tire equator and a first tread edge, the first tread portion comprising a shoulder main groove extending continuously and straight in a tire circumferential direction on a side of the first tread edge, a plurality of oblique main grooves extending obliquely from the first tread edge toward the tire equator so as to intersect with the shoulder main groove and extending to reach beyond the tire equator, a plurality of oblique land regions, each defined between a pair of the oblique main grooves adjacent to each other in the tire circumferential direction, at least some of the oblique land regions each comprising, an outer oblique sub-groove extending on an inner side in the tire axial direction of the shoulder main groove from one of the pair of the oblique main grooves and terminating within the oblique land region, and an inner oblique sub-groove extending on the inner side in the tire axial direction of the outer oblique sub-groove so as to connect between the pair of the oblique main grooves.

In another aspect of the invention, it is preferred that each of the outer oblique sub-grooves and the inner oblique sub-grooves is inclined to an opposite direction to the oblique main grooves.

In another aspect of the invention, it is preferred that the inner oblique sub-grooves have larger groove widths than the outer oblique sub-grooves.

In another aspect of the invention, it is preferred that, in at least one pair of the oblique land regions adjacent to each other in the tire circumferential direction, the inner oblique sub-groove provided in one of the at least one pair of the oblique land regions extends so as to be smoothly connected with the outer oblique sub-groove provided in the other one of the at least one pair of the oblique land regions via the oblique main groove disposed between the at least one pair of the oblique land regions.

In another aspect of the invention, it is preferred that the oblique main grooves have larger groove widths than a groove width of the shoulder main groove at least in regions on the outer side in the tire axial direction of the shoulder main groove.

In another aspect of the invention, it is preferred that a distance in the tire axial direction between the tire equator and a groove center line of the shoulder main groove is in a range of from 0.25 to 0.35 times a tread width.

In another aspect of the invention, it is preferred that angles of the oblique main grooves with respect to the shoulder main groove are in a range of from 30 to 60 degrees.

### Brief Description of the Drawings

Fig.1 is a development view of a tread portion of a tire as an embodiment of the present invention.
Fig. 2 is an enlarged view of a first tread portion of Fig. 1.
Fig. 3 is a partial enlarged view of an oblique land region of Fig, 2.
Fig. 4 is a development view of a tread portion of a tire as Reference 1.
Fig. 5 is a development view of a tread portion of a tire as Reference 2.

### Description of the Preferred Embodiment

An embodiment of the present invention will now be described in detail.

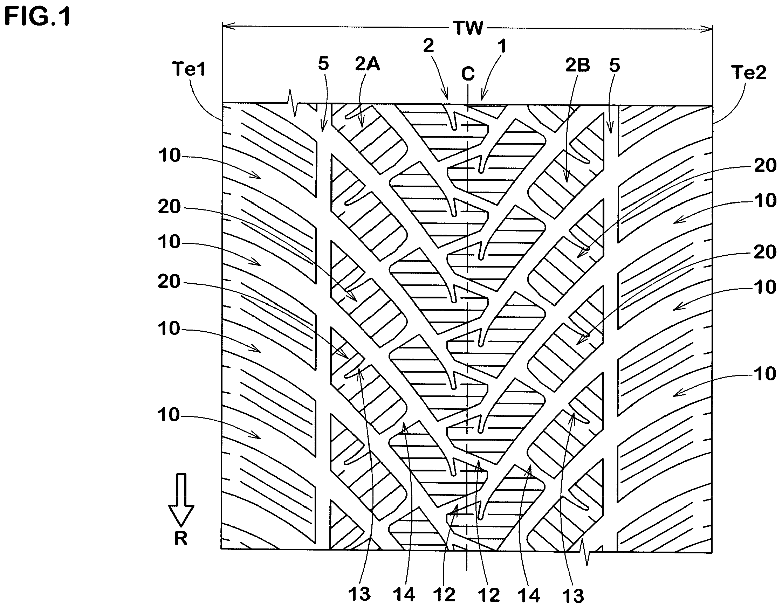

Fig. 1 is a development view of a tread portion 2 of a tire 1 in this embodiment. The tire 1 in this embodiment is suitably used as a winter tire for a passenger car, for example. Further, the tire 1 in this embodiment is provided with a directional pattern in which a rotational direction R is specified. The rotational direction R is indicated as letters or symbols on a sidewall portion (not shown).

As shown in Fig. 1, the tread portion 2 of the tire 1 in this embodiment is provided with a first tread portion 2A between a tire equator C and a first tread edge Te1, and a second tread portion 2B between the tire equator C and a second tread edge Te2.

The first tread edge Te1 and the second tread edge Te2 are defined as outermost ground contacting positions in a tire axial direction when the tire 1 in a standard state is in contact with a flat surface with zero camber angles by being loaded with a standard tire load. The standard state is a state in which the tire 1 is mounted on a standard rim, inflated to a standard pressure, and loaded with no tire load. In this specification, unless otherwise noted, dimensions and the like of various parts of the tire are values measured in the standard state.

The "standard rim" is a wheel rim specified for the concerned tire by a standard included in a standardization system on which the tire is based, for example, the "normal wheel rim" in JATMA, "Design Rim" in TRA, and "Measuring Rim" in ETRTO.

The "standard pressure" is air pressure specified for the concerned tire by a standard included in a standardization system on which the tire is based, for example, the "maximum air pressure" in JATMA, maximum value listed in the "TIRE LOAD LIMITS AT VARIOUS COLD INFLATION PRESSURES" table in TRA, and "INFLATION PRESSURE" in ETRTO.

The "standard load" is a tire load specified for the concerned tire by a standard included in a standardization system on which the tire is based, for example, the "maximum load capacity" in JATMA, maximum value listed in "TIRE LOAD LIMITS AT VARIOUS COLD INFLATION PRESSURES" table in TRA, and "LOAD CAPACITY" in ETRTO.

Each of the first tread portion 2A and the second tread portion 2B is provided with a shoulder main groove 5, a plurality of oblique main grooves 10, a plurality of oblique land regions 20 each defined between a pair of the oblique main grooves 10 adjacent to each other in a tire circumferential direction. The first tread portion 2A and the second tread portion 2B have substantially the same configuration. Hereinafter, configurations of the shoulder main groove 5, the oblique main grooves 10 and the oblique land regions 20 provided in the first tread portion 2A will be described, and the description of these components provided in the second tread portion 2B will be omitted.

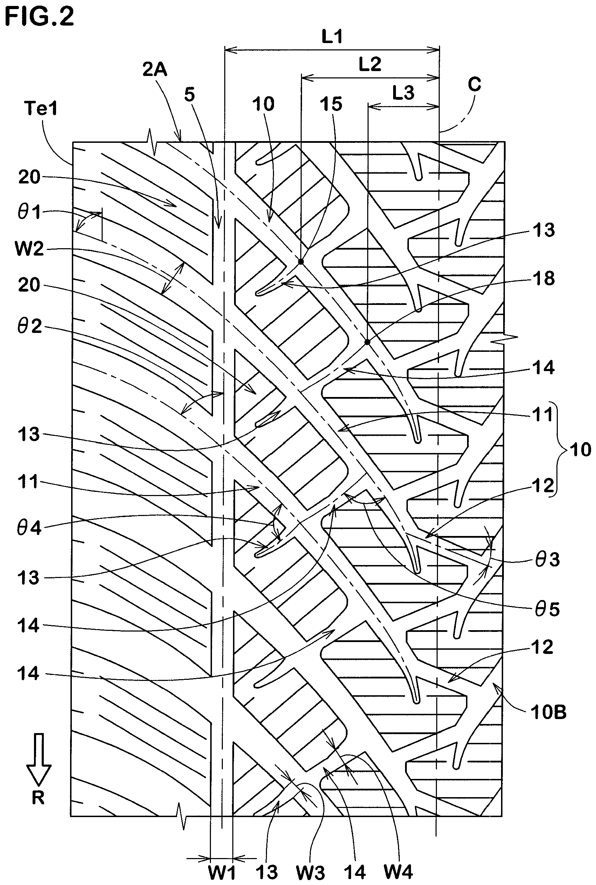

Fig. 2 is an enlarged view of the first tread portion 2A. As shown in Fig. 2, the shoulder main groove 5 extends straight and continuously in the tire circumferential direction on a side of the first tread edge Te1.

It is preferred that a distance L1 between the tire equator C and a groove center line of the shoulder main groove 5 in this embodiment is, for example, in a range of from 0.25 to 0.35 times a tread width TW (shown in Fig 1, same applies hereinafter). The tread width TW is a distance in the tire axial direction between the first tread edge Te1 and the second tread edge Te2 in the standard state.

It is preferred that a groove width w1 of the shoulder main groove 5 is, for example, in a range of from 1.5% to 4.5% of the tread width TW.

It is possible that the shoulder main groove 5 forms a long snow block extending in the tire circumferential direction during running on a snowy road, and therefore, it is possible that large snow shearing force in the tire axial direction is obtained.

The oblique main grooves 10 extend obliquely from the first tread edge Te1 toward the tire equator C so as to intersect with the shoulder main groove 5. The oblique main grooves 10 in this embodiment extend to reach beyond the tire equator C. The oblique main grooves 10 form long snow blocks extending obliquely with respect to the tire axial direction during running on a snowy road and then shear the snow blocks, therefore, it is possible that large traction is obtained.

Each of the oblique main grooves 10 in this embodiment includes, for example, a main body portion 11 and an inner portion 12. The main body portion 11 in this embodiment extends, for example, from the first tread edge Te1 to at least an area between the shoulder main groove 5 and the tire equator C, and terminates without reaching the tire equator C. The inner portion 12 is connected with the main body portion 11 on a side of the tire equator C and extends so as to intersect with the tire equator C.

The main body portions 11 extend, for example, from the first tread end Te1 toward the tire equator C with Angles θ1 gradually decreasing with respect to the tire circumferential direction. It is preferred that the angles θ1 of the main body portions 11 are in a range of from 15 to 75 degrees, for example. The main body portions 11 configured as such exert snow shearing force also in the tire axial direction, therefore, they are helpful for improving cornering performance on a snowy road.

Angles θ2 between the shoulder main groove 5 and the main body portions 11 of the oblique main grooves 10 are preferably not less than 30 degrees, more preferably not less than 40 degrees, and preferably not greater than 60 degrees, more preferably not greater than 50 degrees. It is possible that the main body portions 11 configured as such exert the above-mentioned effects without deteriorating drainage performance of the shoulder main groove 5 during running on a wet road.

It is preferred that the main body portion 11 has a groove width w2 gradually decreasing axially inwardly, for example. It is preferred that the groove width w2 of the main body portion 11 is in a range of from 2% to 7% of the tread width TW, for example. The main body portion 11 configured as such is helpful for improving on-snow performance and wet performance while maintaining steering stability on a dry road surface.

In order to further improve the on-snow performance and the wet performance, it is preferred that the main body portion 11 has the groove width larger than that of the shoulder main groove 5 at least in a region on an outer side of the shoulder main groove 5 in the tire axial direction.

The inner portion 12 is connected with the main body portion 11 on a toe-side in the rotational direction R (hereinafter may be simply referred to as "toe-side") of an terminating end of the main body portion 11. In other words, the inner portion 12 branches off from the main body portion 11 and extends toward the tire equator C.

The inner portion 12 extends straight and obliquely in a same direction as the main body portion 11, for example. The inner portion 12 intersects with the tire equator C so as to be connected with one of oblique main grooves 10B provided in the second tread portion 2B, for example. Generally, large ground contact pressure tends to be applied to an area around the tire equator C, therefore, it is possible that the inner portion 12 strongly compresses snow, thereby, it is possible that excellent on-snow traction is exerted.

In order to exert the snow shearing force also in the tire axial direction, it is preferred that Angles θ3 of the inner portions 12 with respect to the tire axial direction are in a range of from 10 to 30 degrees, for example.

At least some, each in this embodiment, of the oblique land regions 20 are each provided with an outer oblique sub-groove 13 extending on the inner side in the tire axial direction of the shoulder main groove 5 from one of the oblique main grooves 10 adjacent to the oblique land region 20 in the tire circumferential direction and terminating within the oblique land region 20, and an inner oblique sub-groove 14 extending on the inner side in the tire axial direction of the outer oblique sub-groove 13 so as to connect between a pair of the oblique main grooves 10 adjacently disposed on both sides of the oblique land region 20.

Generally, when running on a snowy road, snow that has entered the oblique main grooves 10 tends to be compressed while moving toward each of the sub-grooves. Each of the oblique sub-grooves 13 and 14 in this embodiment compresses snow that has entered from the oblique main grooves 10 and then shears the compressed snow, therefore, it is possible that the on-snow performance is further improved. In particular, the outer oblique sub-grooves 13 in this embodiment terminate within the oblique land regions 20, therefore, it is possible that snow moving from the oblique main grooves 10 during running on a snowy road is compressed further firmly, thereby, large snow shearing force is obtained.

Further, the inner oblique sub-grooves 14 each extending between a pair of adjacent oblique main grooves 10 so as to cross the entire oblique land region 20 are provided on the axially inner side of the outer oblique sub-grooves 13, therefore, each of land region pieces provided with the outer oblique sub-grooves 13 is surrounded by the shoulder main groove 5, the oblique main groove 10, and the inner oblique sub-groove 14. Thereby, the land region pieces can be appropriately deformed when running on a snowy road, and consequently it is possible clogging of snow in the outer oblique sub-grooves 13 is suppressed.

The outer oblique sub-groove 13 is , for example, connected with the oblique main groove 10 adjacent on the toe-side and extends obliquely toward an heel-side in the rotational direction R (hereinafter may be simply referred to as "heel-side") and toward the first tread edge Te1. In other words, the outer oblique sub-grooves 13 are inclined to an opposite direction to the oblique main grooves 10. As a preferred embodiment, the outer oblique sub-grooves 13 in this embodiment are smoothly curved.

Angles θ4 of the outer oblique sub-grooves 13 with respect to the oblique main grooves 10 are preferably not less than 70 degrees, more preferably not less than 75 degrees, and preferably not greater than 90 degrees, more preferably not greater than 85 degrees. Thereby, it is possible that the on-snow performance is improved while suppressing uneven wear of the land pieces provided with the outer oblique sub-grooves 13.

In order to improve the on-snow performance while suppressing the uneven wear of the oblique land regions 20, it is preferred that a distance L2 in the tire axial direction between an intersection point 15 of an extended line of a groove center line of the outer oblique sub-groove 13 with a groove center line of the oblique main groove 10 and the tire equator C is in a range of from 0.15 to 0.25 times the tread width TW, for example.

It is preferred that groove widths w3 of the outer oblique sub-grooves 13 gradually decrease toward end portions thereof which terminate within the oblique land regions 20, for example. Thereby, during running on a snowy road, snow in the outer oblique sub-grooves 13 is easy to be discharged as the oblique land regions 20 deform. It is preferred that the groove widths w3 of the outer oblique sub-grooves 13 are in a range of from 1% to 3% of the tread width TW, for example.

It is preferred that each of the inner oblique sub-grooves 14 is inclined toward the tire equator C from the oblique main groove 10 on the heel-side to the oblique main groove 10 on the toe-side, for example, In other words, the inner oblique sub-grooves 14 are inclined to the opposite direction to the oblique main grooves 10 and are inclined to a same direction as the outer oblique sub-grooves 13.

Angles θ5 of the inner oblique sub-grooves 14 with respect to the oblique main grooves 10 are preferably not less than 70 degrees, more preferably not less than 75 degrees, and preferably not greater than 90 degrees, more preferably not greater than 85 degrees. The inner oblique sub-grooves 14 configured as such can form snow blocks extending in different directions from those of the oblique main grooves 10 while suppressing uneven wear of the oblique land regions 20, and consequently, it is possible that the cornering performance on a snowy road is improved.

It is preferred that the distance L3 in the tire axial direction between an intersection point 18 of an extended line of a groove center line of the inner oblique sub-groove 14 with the groove center line of the oblique main groove 10 provided on the toe-side thereof and the tire equator C is in a range of from 0.05 to 0.15 times the tread width TW, for example. Thereby, the on-snow performance is improved while uneven wear of the oblique land regions 20 is suppressed.

As a further preferred embodiment, at least one, each in this embodiment, of the inner oblique sub-grooves 14 is formed so as to be smoothly connected with corresponding one of the outer oblique sub-grooves 13 provided in the oblique land region 20 adjacent in the tire circumferential direction via one of the oblique main grooves 10 disposed therebetween. Thereby, the outer oblique sub-grooves 13 and the inner oblique sub-grooves 14 can integrally form large snow blocks, therefore, excellent on-snow performance is exerted. Note that the expression "smoothly connected via the oblique main groove 10" means that a region obtained by extending one of the sub-grooves along its shape overlaps with an opening on a side of the oblique main groove 10 of the other one of the sub-grooves.

It is preferred that groove widths W4 of the inner oblique sub-grooves 14 in this embodiment are in a range of from 1% to 3% of the tread width TW, for example. Thereby, clogging of snow in the inner oblique sub-grooves 14 is suppressed.

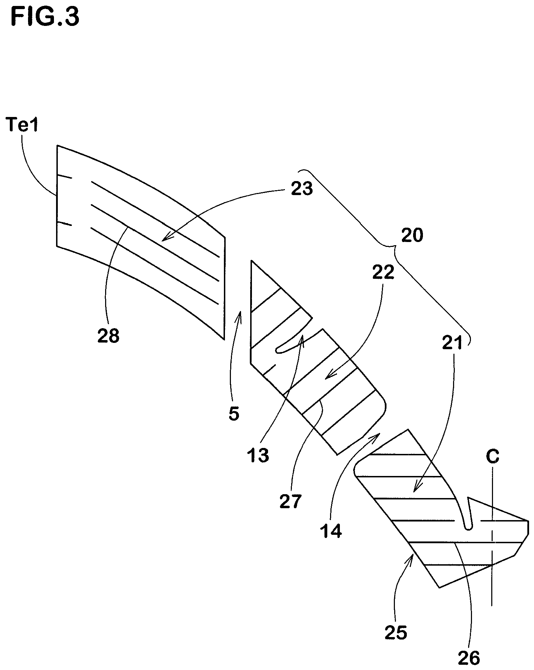

In Fig. 3, an enlarged view of one of the oblique land regions 20 is shown. As shown in Fig. 3, each of the oblique land regions 20 is divided into a crown block 21, a middle block 22, and a shoulder block 23 by the above-described shoulder main groove 5 and the inner oblique sub-groove 14.

The crown block 21 is provided, for example, on the inner side in the tire axial direction of the inner oblique sub-groove 14 and extends so as to cross the tire equator C.

It is preferred that each of the crown blocks 21 in this embodiment is provided with a tip portion 25 that is convex toward the heel-side in the rotational direction R, for example. It is preferred that the tip portion 25 in this embodiment is provided with a v-shaped edge that is convex toward the heel-side. The tip portions 25 configured as such can exert large reaction force during running on an icy road, for example.

It is preferred that each of the crown blocks 21 is provided with a plurality of crown sipes 26 extending in the tire axial direction. The crown sipes 26 configured as such can exert large traction when running on an icy road.

The middle block 22 is provided between the inner oblique sub-groove 14 and the shoulder main groove 5. The middle block 22 is formed in a substantially rectangular shape except that the outer oblique sub-groove 13 is provided, for example. Each of the middle blocks 22 in this embodiment is formed in a laterally-long shape along lengthwise directions of the oblique main grooves 10, for example. The middle blocks 22 configured as such deform moderately in the tire circumferential direction when running on a snowy road, therefore, they are helpful in discharging snow in the oblique main grooves 10.

It is preferred that each of the middle blocks 22 is provided with a plurality of middle sipes 27 inclined to the opposite directions to the oblique main grooves 10, for example. The middle sipes 27 configured as such can exert frictional force in many directions during running on an icy road.

The shoulder block 23 is provided between the shoulder main groove 5 and the first tread edge Te1. Each of the shoulder blocks 23 is, for example, formed in a laterally-elongated rectangular shape along the lengthwise directions of the oblique main grooves 10.

It is preferred that each of the shoulder blocks 23 is provided with a plurality of shoulder sipes 28 inclined to a same direction as the oblique main grooves 10, for example. The shoulder sipes 28 configured as such moderate rigidity of the shoulder blocks 23, therefore, it is possible that excellent wandering performance is exerted.

While detailed description has been made of the tire as an embodiment of the present invention, the present invention can be embodied in various forms without being limited to the illustrated embodiment.

### Working Example (Example)

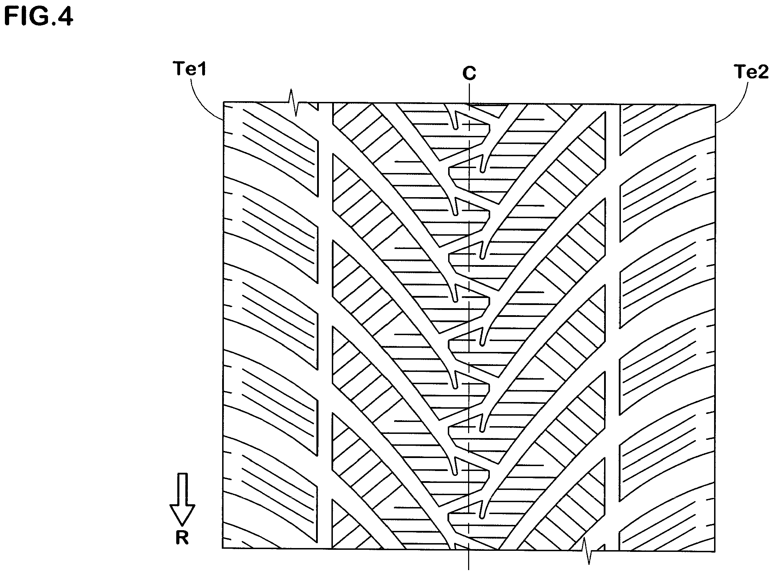

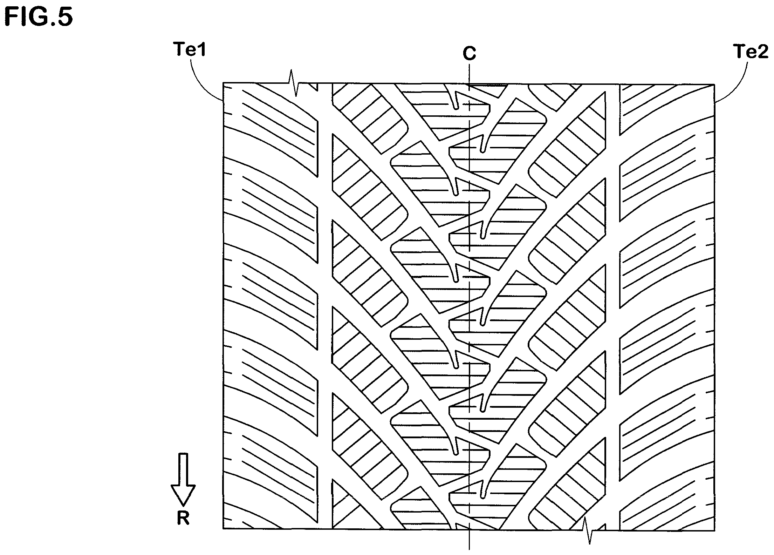

Tires of size 255/55R18 having the basic tread pattern shown in Fig. 1 were made by way of test according to the specifications listed in Table 1. As Reference 1, as shown in Fig. 4, a tire provided with no outer oblique sub-grooves and no inner oblique sub-grooves was made by way of test. As Reference 2, as shown in Fig. 5, a tire provided with the inner oblique sub-grooves but with no outer oblique sub-grooves was made by way of test. Each of the test tires was tested for the on-snow performance, the wet performance, and anti-wear performance. Common specifications and test methods of the test tires are as follows.
Rim: 18x8.0J
Tire pressure: 230 kPa (front wheels), 250 kPa (rear wheels)
Test car: 4WD car with displacement of 3000 cc

### < On-snow performance >

A distance needed for accelerating the above test car from 5 km/h to 20 km/h on a snowy road was measured by GPS and an average acceleration was calculated. The results are indicated by an index based on the average acceleration of the Reference 1 being 100, wherein the larger the numerical value, the better the on-snow performance is.

### < wet Performance >

By using the above test car, lateral acceleration (lateral G) of the front wheels was measured while running on an asphalt road surface having a radius of 100 m and provided with a puddle of 10 mm in depth and 20 m in length. The results are average lateral G at a speed of 55 to 80 km/h and indicated by an index based on the value of the Reference 1 being 100, wherein the larger the numerical value, the better the wet performance is.

### < Anti-Wear Performance >

Amount of wear of the oblique land regions after driving the test car for a certain distance on an asphalt road surface was measured. The results are indicated by an index based on the Reference 1 being 100, wherein the smaller the numerical value, the better the anti-wear performance is. The test results are shown in Table 1.

**Table 1 (1/2)**

| | | Ref.1 | Ref.2 | Ex.1 | Ex.2 | Ex.3 | Ex.4 | Ex.5 | Ex.6 | Ex.7 |
|---|---|---|---|---|---|---|---|---|---|---|
| Figure showing tread pattern | | Fig.4 | Fig.5 | Fig.1 | Fig.1 | Fig.1 | Fig.1 | Fig.1 | Fig.1 | Fig.1 |
| Distance L1 between Tire equator and Shoulder main groove/ Tread width TW | | 0.30 | 0.30 | 0.30 | 0.20 | 0.25 | 0.35 | 0.40 | 0.30 | 0.30 |
| Angles θ2 between Shoulder main groove and Oblique main grooves | | 45 | 45 | 45 | 45 | 45 | 45 | 45 | 30 | 40 |
| | [degree] | | | | | | | | | |
| Angles θ4 of Outer oblique sub-grooves | | - | - | 80 | 80 | 80 | 80 | 80 | 80 | 80 |
| | [degree] | | | | | | | | | |
| Angles θ5 of Inner oblique sub-grooves | | - | 85 | 85 | 85 | 85 | 85 | 85 | 85 | 85 |
| | [degree] | | | | | | | | | |
| On-snow performance | [index] | 100 | 106 | 112 | 111 | 112 | 110 | 109 | 109 | 110 |
| wet performance | [index] | 100 | 104 | 107 | 108 | 107 | 105 | 102 | 108 | 108 |
| Anti-wear performance | [index] | 100 | 103 | 104 | 106 | 105 | 104 | 103 | 106 | 105 |

**Table 1 (2/2)**

| | | Ex.8 | Ex.9 | Ex.10 | Ex.11 | Ex.12 | Ex.13 | Ex.14 | Ex.15 | Ex.16 | Ex.17 |
|---|---|---|---|---|---|---|---|---|---|---|---|
| Figure showing tread pattern | | Fig.4 | Fig.5 | Fig.1 | Fig.1 | Fig.1 | Fig.1 | Fig.1 | Fig.1 | Fig.1 | Fig.1 |
| Distance L1 between Tire equator and Shoulder main groove/ Tread width TW | | 0.30 | 0.30 | 0.30 | 0.30 | 0.30 | 0.30 | 0.30 | 0.30 | 0.30 | 0.30 |
| Angles θ2 between Shoulder main groove and oblique main grooves | | 50 | 60 | 45 | 45 | 45 | 45 | 45 | 45 | 45 | 45 |
| | [degree] | | | | | | | | | | |
| Angles θ4 of Outer oblique sub-grooves | | 80 | 80 | 70 | 75 | 85 | 90 | 80 | 80 | 80 | 80 |
| | [degree] | | | | | | | | | | |
| Angles θ5 of Inner oblique sub-grooves | | 85 | 85 | 85 | 85 | 85 | 85 | 70 | 75 | 80 | 90 |
| | [degree] | | | | | | | | | | |
| On-snow performance | [index] | 112 | 112 | 110 | 110 | 112 | 112 | 110 | 111 | 112 | 112 |
| wet performance | [index] | 105 | 104 | 107 | 107 | 107 | 106 | 106 | 107 | 107 | 106 |
| Anti-wear performance | [index] | 103 | 103 | 106 | 105 | 104 | 103 | 105 | 105 | 104 | 103 |

From the test results, it was confirmed that the on-snow performance and the wet performance of the tires as the Examples were improved. Further, it was confirmed that the tires as the Examples maintained the anti-wear performance.

## Claims

1. A tire (1) comprising:
a tread portion (2) comprising a first tread portion (2A) defined between a tire equator (C) and a first tread edge (Te1), the first tread portion (2A) comprising:
a shoulder main groove (5) extending continuously and straight in a tire circumferential direction on a side of the first tread edge (Te1);
a plurality of oblique main grooves (10) extending obliquely from the first tread edge (Te1) toward the tire equator (C) so as to intersect with the shoulder main groove (5) and extending to reach beyond the tire equator (C);
a plurality of oblique land regions (20), each defined between a pair of the oblique main grooves (10) adjacent to each other in the tire circumferential direction, at least some of the oblique land regions (20) each comprising:
an outer oblique sub-groove (13) extending on an inner side in the tire axial direction of the shoulder main groove (5) from one of the pair of the oblique main grooves (10) and terminating within the oblique land region (20); and
an inner oblique sub-groove (14) extending on the inner side in the tire axial direction of the outer oblique sub-groove (13) so as to connect between the pair of the oblique main grooves (10).

2. The tire (1) according to claim 1, wherein
each of the outer oblique sub-grooves (13) and the inner oblique sub-grooves (14) is inclined to an opposite direction to the oblique main grooves (10).

3. The tire (1) according to claim 1 or 2, wherein
the inner oblique sub-grooves (14) have larger groove widths than the outer oblique sub-grooves (13).

4. The tire (1) according to any one of claims 1 to 3, wherein
in at least one pair of the oblique land regions (20) adjacent to each other in the tire circumferential direction, the inner oblique sub-groove (14) provided in one of the at least one pair of the oblique land regions (20) extends so as to be smoothly connected with the outer oblique sub-groove (13) provided in the other one of the at least one pair of the oblique land regions (20) via the oblique main groove (10) disposed between the at least one pair of the oblique land regions (20).

5. The tire (1) according to any one of claims 1 to 4, wherein
the oblique main grooves (10) have larger groove widths (W2) than a groove width (W1) of the shoulder main groove (5) at least in regions on the outer side in the tire axial direction of the shoulder main groove (5).

6. The tire (1) according to any one of claims 1 to 5, wherein
a distance (L1) in the tire axial direction between the tire equator (C) and a groove center line of the shoulder main groove (5) is in a range of from 0.25 to 0.35 times a tread width (TW).

7. The tire (1) according to any one of claims 1 to 6, wherein
angles (θ2) of the oblique main grooves (10) with respect to the shoulder main groove (5) are in a range of from 30 to 60 degrees.

## Patentansprüche

1. Reifen (1), umfassend:
einen Laufflächenabschnitt (2), der einen ersten Laufflächenabschnitt (2A) umfasst, der zwischen einem Reifenäquator (C) und einem ersten Laufflächenrand (Te1) definiert ist, wobei der erste Laufflächenabschnitt (2A) umfasst:
eine Schulterhauptrille (5), die sich in einer Umfangsrichtung des Reifens auf einer Seite des ersten Laufflächenrandes (Te1) kontinuierlich und gerade erstreckt;
mehrere schräge Hauptrillen (10), die sich von dem ersten Laufflächenrand (Te1) derart schräg in Richtung des Reifenäquators (C) erstrecken, dass sie die Schulterhauptrille (5) schneiden, und sich derart erstrecken, dass sie über den Reifenäquator (C) hinausreichen;
mehrere schräge Landbereiche (20), die jeweils zwischen einem Paar der schrägen Hauptrillen (10), die zueinander in der Umfangsrichtung des Reifens benachbart sind, definiert sind, wobei zumindest einige der schrägen Landbereiche (20) jeweils umfassen:
eine äußere schräge Unterrille (13), die sich an einer Innenseite der Schulterhauptrille (5) in der axialen Richtung des Reifens von einer des Paares der schrägen Hauptrillen (10) erstreckt und innerhalb des schrägen Landbereichs (20) endet; und
eine innere schräge Unterrille (14), die sich auf der Innenseite der äußeren schrägen Unterrille (13) in der axialen Richtung des Reifens derart erstreckt, dass sie eine Verbindung zwischen dem Paar der schrägen Hauptrillen (10) herstellt.

2. Reifen (1) nach Anspruch 1, wobei
jede der äußeren schrägen Unterrillen (13) und der inneren schrägen Unterrillen (14) bezüglich der schrägen Hauptrillen (10) in eine entgegengesetzte Richtung geneigt ist.

3. Reifen (1) nach Anspruch 1 oder 2, wobei
die inneren schrägen Unterrillen (14) größere Rillenbreiten als die äußeren schrägen Unterrillen (13) aufweisen.

4. Reifen (1) nach einem der Ansprüche 1 bis 3, wobei
in zumindest einem Paar der schrägen Landbereiche (20), die zueinander in der Umfangsrichtung des Reifens benachbart sind, sich die innere schräge Unterrille (14), die in einem des zumindest einen Paares der schrägen Landbereiche (20) vorgesehen ist, derart erstreckt, dass sie mit der äußeren schrägen Unterrille (13), die in dem anderen des zumindest einen Paares der schrägen Landbereiche (20) vorgesehen ist, über die schräge Hauptrille (10), die zwischen dem zumindest einen Paar der schrägen Landbereiche (20) angeordnet ist, glatt verbunden ist.

5. Reifen (1) nach einem der Ansprüche 1 bis 4, wobei
die schrägen Hauptrillen (10) zumindest in Bereichen auf der Außenseite der Schulterhauptrille (5) in der axialen Richtung des Reifens größere Rillenbreiten (W2) als eine Rillenbreite (W1) der Schulterhauptrille (5) aufweisen.

6. Reifen (1) nach einem der Ansprüche 1 bis 5, wobei
eine Distanz (L1) in der axialen Richtung des Reifens zwischen dem Reifenäquator (C) und einer Rillenmittelachse der Schulterhauptrille (5) in einem Bereich von 0,25 bis 0,35 mal eine Laufflächenbreite (TW) liegt.

7. Reifen (1) nach einem der Ansprüche 1 bis 6, wobei
Winkel (θ2) der schrägen Hauptrillen (10) bezogen auf die Schulterhauptrille (5) in einem Bereich von 30 bis 60 Grad liegen.

## Revendications

1. Pneumatique (1) comprenant :
une portion formant bande de roulement (2) comprenant une première portion de bande de roulement (2A) définie entre un équateur de pneumatique (C) et un premier bord de roulement (Te1), la première portion de bande de roulement (2A) comprenant :
une rainure principale d'épaulement (5) s'étendant en continu et en ligne droite dans une direction circonférentielle du pneumatique sur un côté du premier bord de roulement (Te1) ;
une pluralité de rainures principales obliques (10) s'étendant en oblique depuis le premier bord de roulement (Te) vers l'équateur de pneumatique (C) de manière à recouper la rainure principale d'épaulement (5) et s'étendant de manière à s'étendre au-delà de l'équateur de pneumatique (C) ;
une pluralité de régions en relief obliques (20), définies chacune entre une paire des rainures principales obliques (10) adjacentes l'une à l'autre dans la direction circonférentielle du pneumatique, et au moins certaines des régions en relief obliques (20) comprenant chacune :
une sous-rainure oblique extérieure (13) s'étendant sur un côté intérieur dans la direction axiale du pneumatique de la rainure principale d'épaulement (5) depuis l'une de la paire de rainures principales obliques (10) et se terminant à l'intérieur de la région en relief oblique (20) ; et
une sous-rainure oblique intérieure (14) s'étendant sur le côté intérieur dans la direction axiale du pneumatique de la sous-rainure oblique extérieure (13) de manière à assurer une connexion entre la paire de rainures principales obliques (10).

2. Pneumatique (1) selon la revendication 1, dans lequel
chacune des sous-rainures obliques extérieures (13) et des sous-rainures obliques intérieures (14) est inclinée vers une direction opposée aux rainures principales obliques (10).

3. Pneumatique (1) selon la revendication 1 ou 2, dans lequel
les sous-rainures obliques intérieures (14) présentent des largeurs de rainure plus grandes que celles des sous-rainures obliques extérieures (13).

4. Pneumatique (1) selon l'une quelconque des revendications 1 à 3, dans lequel
dans au moins une paire de régions en relief obliques (20) adjacentes l'une à l'autre dans la direction circonférentielle du pneumatique, la sous-rainure oblique intérieure (14) prévue dans l'une de ladite au moins une paire de régions en relief obliques (20) s'étend de manière à être connectée en douceur avec la sous-rainure oblique extérieure (13) prévue dans l'autre de ladite au moins une paire de régions en relief obliques (20) via la rainure principale oblique (10) disposée entre ladite au moins une paire de régions en relief obliques (20).

5. Pneumatique (1) selon l'une quelconque des revendications 1 à 4, dans lequel
les rainures principales obliques (10) ont des largeurs de rainure (W2) plus grandes qu'une largeur de rainure (W) de la rainure principale d'épaulement (5) au moins dans des régions sur le côté extérieur dans la direction axiale du pneumatique de la rainure principale d'épaulement (5).

6. Pneumatique (1) selon l'une quelconque des revendications 1 à 5, dans lequel
une distance (L1) dans la direction axiale du pneumatique entre l'équateur de pneumatique (C) et une ligne centrale de la rainure principale d'épaulement (5) est dans une plage de 0,25 à 0,35 fois une largeur de roulement (TW).

7. Pneumatique (1) selon l'une quelconque des revendications 1 à 6, dans lequel
des angles (θ2) des rainures principales obliques (10) par rapport à la rainure principale d'épaulement (5) sont dans une plage de 30 à 60°.
